Europäisches Patentamt

European Patent Office

Office européen des brevets

(11) Numéro de publication : **0 494 128 B1**

(12) **FASCICULE DE BREVET EUROPEEN**

(45) Date de publication du fascicule du brevet :
**01.12.93 Bulletin 93/48**

(51) Int. Cl.⁵ : **C04B 35/65,** C01B 21/082,
H01C 1/034

(21) Numéro de dépôt : **92420003.3**

(22) Date de dépôt : **02.01.92**

(54) **Produit à base d'oxynitrure mixte pour garnissage de résistance électrique blindée et application réfractaire, et procédé d'obtention.**

(30) Priorité : **03.01.91 FR 9100378**

(43) Date de publication de la demande :
**08.07.92 Bulletin 92/28**

(45) Mention de la délivrance du brevet :
**01.12.93 Bulletin 93/48**

(84) Etats contractants désignés :
**DE ES FR GB IT SE**

(56) Documents cités :
**DE-C- 3 812 266**

(73) Titulaire : **PECHINEY ELECTROMETALLURGIE
Tour Manhattan La Défense 2 6 Place de l'Iris
F-92400 Courbevoie (FR)**

(72) Inventeur : **Dubots, Dominique
107, rue des Moranches
F-Chedde 74190 Passy (FR)**
Inventeur : **Faure, Pierre
Le Gite
F-38210 Saint Quentin sur Isere (FR)**

(74) Mandataire : **Vanlaer, Marcel et al
PECHINEY 28, rue de Bonnel
F-69433 Lyon Cédex 3 (FR)**

EP 0 494 128 B1

## Description

L'invention concerne un produit réfractaire à base d'oxynitrure double de magnésium et d'aluminium, conservant à haute température une très forte résistivité électrique et une bonne conductibilité thermique, destiné notamment à être utilisé comme garnissage de résistance électrique blindée (appelé également élément chauffant ou résistor) ou comme réfractaire électrofondu dans le domaine des très hautes températures; elle concerne également son procédé d'obtention.

## ETAT DE LA TECHNIQUE

Les résistors sont généralement constitués d'une résistance électrique chauffante noyée dans un produit de garnissage qui doit présenter de très bonnes qualités d'isolation électrique, de conductibilité thermique et de stabilité chimique à haute température ainsi qu'un point de fusion élevé (réfractarité); le tout est contenu dans une enveloppe ou gaine conductrice de la chaleur, souvent métallique voire en matière réfractaire dense.

La matière de garnissage la plus couramment utilisée est la magnésie qui présente une bonne conductibilité thermique (30 $Wm^{-1}K^{-1}$) et une très bonne résistivité électrique ($10^5$ $\Omega m$) qui malheureusement chute rapidement au dessus de 1100°C, ce qui limite son domaine d'emploi. De plus ladite magnésie peut se trouver rapidement dégradée à l'air libre en présence de l'humidité ambiante, ce qui peut provoquer des courants de fuite inacceptables; pour pallier ce dernier inconvénient, on peut traiter la magnésie avec des produits hydrophobes aussi stables que possible vis à vis de la température et/ou prendre des précautions de manipulation ou de construction des résistors pour éviter sa mise à l'air et sa dégradation en présence d'humidité.

La baisse de résistivité observée en fonction de la température est préjudiciable et est fonction de la plus ou moins bonne qualité de la magnésie.

On connaît par le document DE-C-3812 266 des matériaux moulés obtenus par métallurgie des poudres contenant de l'alumine et/ou du nitrure d'aluminium et/ou de l'oxynitrure d'aluminium, dans lesquels a été introduit de l'alliage d'Al pouvant contenir Mg, l'alliage ayant au moins partiellement réagi vers $Al_2O_3$, AlN ou l'Alon.

## DESCRIPTION DE L'INVENTION

La demanderesse a recherché un produit de garnissage pour résistor ayant une résistivité électrique améliorée moins sensible à la température que la magnésie, tout en ayant une bonne conductibilité thermique, une bonne réfractarité et une inertie chimique particulièrement forte y compris à haute température.

Elle a ainsi mis au point un produit de garnissage de résistor électrique comprenant au moins une poudre d'oxynitrure mixte d'aluminium et d'un ou plusieurs métaux alcalino-terreux, y compris le magnésium. Les oxynitrures mixtes contenant du magnésium sont particulièrement intéressants, mais également ceux contenant Mg et Ca de même que ceux où Ca est remplacé au moins partiellement par Sr.

Ces produits utilisés notamment sous forme de particules de granulométrie appropriée pour le remplissage des gaines de résistors présentent une résistivité élevée qui se maintient même à des températures supérieures à 1100°C. De plus, ils ont une excellente stabilité chimique vis-à-vis de l'humidité, ce qui évite les risques de dégradation chimique génératrice d'espèces conductrices pouvant entraîner des courants de fuite dans les résistors.

L'invention présente également l'avantage de pouvoir obtenir des produits qui sont nettement plus économiques que la magnésie habituellement utilisée, tout en présentant une conductibilité thermique et une résistivité électrique proches ou au moins égales à celle de la magnésie, ladite résistivité conservant toujours son insensibilité à la température et à l'humidité.

Les produits selon l'invention à base de Mg contiennent en général une phase constituée d'une solution solide d'AlN dans MgO du type spinelle d'AlON (MgOAlON). Les raies d'un tel produit, observées par diffraction de rayons X, s'apparentent à celles d'un spinelle (oxyde naturel de magnésium et d'aluminium) et en sont décalées du fait du remplacement au moins partiel, dans ce dernier, de l'oxygène par l'azote. Dans le produit de l'invention AlN n'existe pas en tant que phase individuelle, ce qui explique l'insensibilité à l'eau. On notera également que dans ledit "maglon" il est possible de substituer au moins en partie au magnésium des éléments alcalino-terreux pour obtenir par exemple des oxynitrures triples de Mg, Al et Ca utilisables dans les résistors.

Selon l'invention les oxynitrures mixtes sont obtenus par nitruration directe d'un mélange de particules métalliques et d'oxydes, infusibles dans les conditions de la nitruration, en présence d'un gaz azoté à une température en général supérieure à la température de fusion des métaux sans que l'on note de fusion apparente de la charge, l'oxynitrure obtenu étant partiellement ou totalement fritté.

La stabilité thermique de ces produits permet aussi de les fondre ultérieurement, par exemple par élec-

2

trothermie en four à arc, sans que l'on note de décomposition des espèces nitrurées contenues, ou de les introduire dans un bain d'oxydes fondus (par exemple MgO, MgO+Al$_2$O$_3$ ou plus généralement les bains servant à l'obtention des oxynitrures mixtes selon l'invention et cités plus loin) pour se combiner avec lui et donner un nouvel oxynitrure mixte. Les produits ainsi obtenus sont également des oxynitrures mixtes selon l'invention et sont susceptibles d'être utilisés, comme précédemment, après coulée, solidification et broyage, au garnissage de résistors ou comme réfractaire, ou encore d'être coulés sous forme de pièces à usage de réfractaire, de garnissage de réacteur etc... puis solidifiés.

Les particules métalliques utilisées dans l'invention sont à base d'Al et/ou de métaux alcalino-terreux (y compris le magnésium) de leurs mélanges ou leurs alliages.

La nature des oxydes infusibles est complémentaire de celle des métaux utilisés en vue d'obtenir l'oxynitrure mixte recherché; ils peuvent être un mélange d'oxydes ou une combinaison d'oxydes. Ils peuvent être la magnésie, l'alumine, la dolomie calcinée (MgO,CaO), la chaux, l'oxyde de strontium, leurs mélanges ou combinaisons comme les aluminates de calcium ou strontium... La granulométrie est en général inférieure à 600 µm.

Pour démarrer la réaction de nitruration on chauffe le mélange sous atmosphère de gaz azoté à une température de démarrage, comprise en général entre 500 et 1100°C, dépendant surtout du métal à nitrurer. Après démarrage la réaction de nitruration exothermique se poursuit d'elle-même, et on règle sa température en contrôlant le débit du gaz azoté consommé (azote, ammoniac, hydrazine...)

Dans une première variante, appliquée par exemple aux oxynitrures mixtes contenant Mg, on peut partir d'un mélange, tel quel ou sous forme agglomérée, de particules ou de poudre de magnésium de préférence inférieure à 800 µm et d'une poudre d'alumine de préférence inférieure à 600 µm; on chauffe progressivement jusque vers 600-650°C sous atmosphère d'azote; une fois la nitruration commencée la température tend à augmenter sans que l'on constate de fusion apparente de la charge en cours de réaction. La réaction est contrôlée par le débit d'azote, et on laisse volontairement monter la température jusque vers au plus 1100°C car au delà la tension de vapeur du magnésium qui n'a pas encore réagi serait gênante.

On obtient un produit à base d'oxynitrure que l'on peut introduire dans un bain de MgO fondu pouvant contenir de l'alumine, couler, solidifier puis broyer à la granulométrie voulue pour récupérer un oxynitrure mixte d'Al et Mg en poudre particulièrement adapté au garnissage des résistors.

Dans une deuxième variante, on peut effectuer un mélange de poudre de MgO calcinée et broyée, de préférence inférieure à 250 µm environ, et de granules d'Al pouvant atteindre au plus 1,5 mm; la proportion d'Al peut atteindre 65% sans risque de fusion de la charge.

Ce mélange, tel quel ou sous forme de pastilles obtenues par pressage à froid, est ensuite chauffé jusqu'à au moins environ 900°C dans une atmosphère de gaz azoté après un éventuel dégazage sous vide, ou mieux entre 950 et 1050°C. A cette température s'initie une nitruration rapide et exothermique.

On la contrôle en réglant le débit d'azote. Il est préférable que l'azote percole à travers la charge pour éviter une coalescence des grains d'aluminium. L'apport d'azote doit être suffisant pour permettre une nitruration rapide qui provoque une montée en température jusque vers 1700°C ce qui permet d'obtenir alors une charge partiellement frittée d'oxynitrure; cette nitruration s'effectue sans que s'opère de fusion apparente de la charge.

Il est bien connu que la nitruration directe de l'aluminium est difficile et qu'elle requiert en général une température supérieure au point de fusion de l'Al; or l'expérience montre que, si les métaux solides et divisés peuvent se nitrurer assez bien, les mêmes métaux une fois fondus se nitrurent le plus souvent assez mal.

Le phénomène inattendu que l'on a constaté est que ces mêmes métaux (en particulier Al et Mg), sont capables de se nitrurer complètement même à des températures supérieures à leur température de fusion à condition de les mettre en contact avec une surface solide et inerte de dimension suffisante.

Ainsi se comportent les mélanges de particules Al + MgO, mais également des mélanges similaires d'Al avec d'autres oxydes infusibles ou réfractaires et inertes vis à vis d'Al à des températures où Al est liquide sans que l'on note de façon macroscopique de traces apparentes de fusion. Il se passe la même chose avec des mélanges de particules de Mg ou d'autres métaux alcalino-terreux et d'un oxyde infusible ou réfractaire et inerte vis à vis de Mg (par exemple Al$_2$O$_3$), que l'on nitrure à des températures supérieures à la température de fusion du métal, comme cela a déjà été indiqué.

Comme cela a déjà été dit, l'oxynitrure mixte obtenu peut ensuite être fondu ou introduit dans un bain d'oxydes fondus, par exemple MgO vers 3000°C pouvant contenir de l'alumine; la phase liquide obtenue peut être coulée puis solidifiée.

Bien que la température du bain dans lequel on introduit l'oxynitrure mixte puisse se situer vers 3000°C et qu'au dessus de 2700°C AlN n'est plus stable dans des conditions normales, on constate de façon inattendue qu'il ne se produit aucun dégagement d'azote ni aucune projection traduisant un phénomène de décomposition de l'oxynitrure mixte introduit ou formé dans le bain de MgO liquide, et que le rendement en azote de l'opération est proche de 100%.

Pour obtenir l'oxynitrure mixte d'Al et Mg, on peut également selon l'invention, introduire directement de

3

EP 0 494 128 B1

l'AlN dans MgO liquide vers 3000°C; la réaction est tout aussi calme et on n'observe aucune décomposition notable d'AlN: l'oxynitrure formé au fur et à mesure de l'introduction d'AlN suffit à stabiliser complètement les produits et dans ces conditions le rendement d'azote est voisin de 100%.

On obtient, après coulée et refroidissement, un oxynitrure mixte d'Al et de Mg électrofondu beaucoup plus massif qu'un oxynitrure fritté et présentant donc de meilleures caractéristiques: solidité, résistance à la corrosion chimique etc... Ce produit peut être broyé à la granulométrie voulue.

On obtient ainsi selon l'invention un produit doté d'une inertie chimique remarquable, susceptible d'applications réfractaires dans des conditions d'utilisation extrêmes de température et/ou de corrosion.

Il est en particulier très intéressant de l'utiliser comme garnissage dans les résistors, mais aussi dans toutes applications réclamant simultanément un produit isolant électrique et bon conducteur de la chaleur, notamment à haute température.

Parmi les produits de l'invention particulièrement intéressants on peut citer, en plus des oxynitrures mixtes d'Al et Mg, les oxynitrures mixtes contenant Al, Mg et Ca, notamment ceux où le rapport en atome % Al/(Al+Mg+Ca) est compris entre 0,1% et 40% de préférence entre 15% et 25% et parmi ceux-ci :

. ceux dans lesquels Mg/(Mg+Ca) est compris entre 0,1% et 70%, et de préférence entre 43% et 53%
. et/ou ceux dans lesquels Ca/(Ca+Mg) est compris entre 0,1% et 3%
. et/ou ceux dans lesquels Al/(Al+Mg) est compris entre 15 et 25% ou compris entre 0,1% et 7%.

## EXEMPLES

### Exemple 1.

Cet exemple illustre l'obtention d'un oxynitrure mixte selon l'invention par la première variante.

On a préparé un mélange de 14 kg de Mg en poudre (comprise entre 50 et 100 $\mu$m) et de 25,4 kg d'une poudre d'alumine (inférieure à 100 $\mu$m) que l'on a transformé en pastilles. Celles-ci ont été chauffées progressivement dans un four placé sous pression d'azote de 1 atm. A 610°C on a constaté un démarrage rapide de la nitruration avec consommation d'azote. La réaction est très exothermique. La température a été volontairement limitée à 1100°C en régulant le débit d'azote dans le four.

La durée de la nitruration a été de 30 minutes.

Le produit obtenu se présente sous la forme d'une poudre grisâtre peu frittée; elle ne contient plus de Mg métallique; elle est constituée essentiellement des phases $Al_2O_3$ et $Mg_3N_2$ et d'oxynitrure double de Mg et Al.

Ce produit a été introduit dans un bain de 46 kg de MgO liquide fondu dans un four à arc. Après coulée, solidification et broyage, le produit a été analysé: il est constitué essentiellement d'une solution d'AlN dans MgO, qui est un oxynitrure mixte de Mg et Al solide dénommé "maglon".

Ce produit ainsi préparé a été comparé à la magnésie électrofondue comme garnissage de résistors dans des essais conduits de façon identiques: le résistor a été chauffé dans un four et on a mesuré pour chaque température le courant de fuite sous une tension continue de 500 V qui sera utilisée dans tous les exemples). Les courants de fuites mesurées sont donnés dans le tableau suivant:

| Température °C | 1000°C | 1150°C | 1200°C |
|---|---|---|---|
| Magnésie | 16mA | CC* | CC* |
| maglon | 9mA | 11mA | 14mA |

CC = court circuit entre le filament chauffant et la gaine du résistor

dû à l'effondrement de la résistivité électrique du produit de remplissage.

On a par ailleurs mesuré la conductibilité thermique de ce maglon qui est de 40 $Wm^{-1}K^{-1}$.

4

Exemple 2

Cet exemple illustre l'obtention d'un oxynitrure selon l'invention par la seconde variante.

On a mélangé 40 kg d'une poudre grossière d'aluminium (granulométrie moyenne de 1 mm environ) et 60 kg de poudre de magnésie broyée inférieure à 250 μm. On a ensuite préparé des pastilles qui ont été mises dans un four, dégazées, et chauffées jusqu'à 960°C sous atmosphère d'azote. Après démarrage de la nitruration la température est montée à 1680°C. L'opération complète a duré 45 minutes.

On a récupéré 120 kg de pastilles frittées de MgAlON où MgO et AlN étaient en solution solide sous forme de spinelle d'AlON.

Ce produit a été comparé avec de la magnésie pure électrofondue dans des résistors identiques.
- Le courant de fuite observé est de 12 mA pour l'oxynitrure et de 16 mA pour MgO, mesuré dans les mêmes conditions sous 500 V à 1000°C.
- les résistors ont été montés en température: à 1150°C le résistor contenant MgO s'est mis en court-circuit, alors qu'à 1200°C celui contenant de l'oxynitrure présentait toujours une résistance d'isolement certaine: courant de fuite de 17 mA sous 500 V.

Exemple 3

On a introduit 2,5 kg de l'oxynitrure mixte fritté obtenu dans l'exemple 2 dans 75 kg de MgO fondu au four à arc.

Le produit obtenu a été coulé, refroidi, broyé et analysé. Sa structure est celle d'une solution solide d'AlN dans MgO.

Le maglon ainsi préparé a été utilisé comme garnissage dans des résistors; les courants de fuite mesurés ont été les suivants :

à 1000°C     12 mA
à 1150°C     18 mA
à 1200°C     CC

La conductibilité thermique de ce produit est de 30 $Wm^{-1} K^{-1}$ , valeur équivalente à celle de la magnésie.

Cet exemple montre qu'une faible addition d'AlN apportée ici par le maglon, peut améliorer sensiblement la résistivité électrique de la magnésie électrofondue utilisée pour le garnissage des résistors.

Exemple 4

On a introduit 32 kg de l'oxynitrure mixte fritté obtenu dans l'exemple 2 dans 48 kg de MgO fondu au four à arc.

Le produit obtenu a été coulé, refroidi, broyé puis analysé. Sa structure est celle d'une solution solide d'AlN dans MgO.

Le maglon ainsi préparé a été utilisé comme garnissage de résistors; les courants de fuite mesurés ont été les suivants:

à 1000°C     8 mA
à 1150°C     10mA
à 1200°C     13 mA

La conductibilité thermique de ce produit est de 45 $Wm^{-1} K^{-1}$.

Cet exemple montre qu'avec une forte addition d'AlN dans MgO, de 20% dans cet exemple, on prépare un maglon qui surclasse largement la magnésie électrofondue.

Exemple 5

On a préparé un mélange de 144 kg de dolomie calcinée contenant 41,5% de MgO et 57,7% de CaO réduite en poudre inférieure à 100 microns, avec 80 kg d'aluminium en grains de 1mm environ.

Ce mélange non pastillé, a été traité dans un four sous pression d'azote de 1,2 atm. La nitruration de l'aluminium a démarré à 960°C. La température a atteint 1630°C. L'opération a duré 65 minutes.

On a récupéré une masse solide frittée de 265 kg.

Après concassage et broyage, le produit a été testé comme garnissage de résistor. Les courants de fuite mesurés ont été les suivants:

à 1000°C     13 mA
à 1200°C     18 mA

La conductibilité thermique de ce produit est de 25 $Wm^{-1} K^{-1}$.

Ce produit est particulièrement économique.

Exemple 6

On a introduit 32 kg du produit obtenu dans l'exemple 5 dans 48 kg de MgO fondu au four à arc.
Le produit coulé, broyé, a été testé comme garnissage de résistor. Les courants de fuite mesurés ont été les suivants:

à 1000°C     12 mA
à 1200°C     16 mA

La conductibilité thermique de ce produit est de 35 $Wm^{-1} K^{-1}$.

Exemple 7

On a préparé un mélange de 138,6 kg d'aluminate de chaux titrant 52% d'$Al_2O_3$ et 48% de CaO broyé à 400 microns avec 50,4 kg de magnésium en poudre de 300 à 800 microns.
Le mélange a été chauffé sous azote dans un four étanche. La nitruration a démarré à 625°C. La température a été maintenue à 1100°C en limitant l'arrivée d'azote dans le four. Après 40 minutes la réaction a été totale.
On a récupéré 208 kg d'une poudre qui a été introduite progressivement dans un four à arc dans lequel on avait fondu au départ 78 kg de magnésie.
La masse fondue obtenue a été coulée, refroidie, broyée, et analysée. Ce produit était constitué d'un oxynitrure complexe de Ca, Mg et Al tout à fait inerte à l'eau.
Ce produit a été utilisé comme garnissage de résistor. Les courants de fuite mesurés ont été les suivants:

à 1000°C     10 mA
à 1150°C     12 mA
à 1200°C     15 mA

La conductibilité thermique de ce produit est de 30 $Wm^{-1}.K^{-1}$.

Exemple 8

On a préparé un mélange de 76 kg d'aluminate de strontium titrant 33% d'$Al_2O_3$ et 67% de SrO broyé à 250 $\mu$m avec 17 kg de magnésium en poudre 50-800 microns.
Le mélange a été chauffé sous azote dans un four étanche. La nitruration a démarré à 590°C. La température a été maintenue à 1100°C en limitant l'arrivée d'azote dans ce four. Après 15 minutes la réaction a été totale.
On a récupéré 98 kg d'une poudre qui a été refondue dans un four à arc dans lequel il y avait un pied de bain de 10 kg de dolomie calcinée fondue.
La masse fondue obtenue a été coulée, refroidie, broyée et analysée par diffraction de rayons X.
On a bien constaté l'absence de la phase AlN bien que le produit ait donné à l'analyse 5,7% de $N_2$. Ce produit, inerte à l'eau, a été testé comme garnissage de résistor calrods. Les courants de fuite observés ont été les suivants:

à 1000°C     12 mA
à 1150°C     14 mA
à 1200°C     17 mA

La conductibilité thermique de ce produit est de 30 $Wm^{-1}.K^{-1}$.

Exemple 9

Le produit obtenu dans l'exemple 4 a été broyé à 160 microns. Un échantillon de magnésie d'origine électrofondue a été broyé dans les mêmes conditions.
Un échantillon de 2 g de chacun des deux produits a été versé dans un bain de tétraborate de lithium maintenu à 1100°C:
- l'échantillon de magnésie a été complètement dissout en 15 minutes.
- l'échantillon de maglon a nécessité 1h40 minutes pour être dissout.
Cet exemple montre que la résistance à la corrosion du maglon est nettement plus forte que celle de la magnésie électrofondue.

**Revendications**

1. Produit de garnissage de résistance électrique blindée caractérisé en ce qu'il comprend une poudre d'oxynitrure mixte d'aluminium et d'un ou plusieurs métaux alcalino-terreux, y compris le magnésium, dans lequel le composé AlN n'existe pas en tant que phase individuelle.

2. Produit selon la revendication 1 caractérisé en ce que le métal est le magnésium.

3. Produit selon la revendication 1 caractérisé en ce que les métaux sont le magnésium et le calcium.

4. Produit selon la revendication 3 caractérisé en ce que le calcium est remplacé au moins partiellement par le strontium.

5. Produit selon l'une quelconque des revendications 1 à 4, caractérisé en ce que l'oxynitrure a au moins partiellement une structure de spinelle d'oxydes de magnésium et d'aluminium dans lequel l'oxygène a été remplacé au moins partiellement par de l'azote.

6. Produit selon l'une quelconque des revendications 3 à 5 caractérisé en ce que le rapport atomique Al/(Al + Mg + Ca) est compris entre 0,1% et 40% et de préférence entre 15% et 25%.

7. Produit selon l'une quelconque des revendications 3 à 6 caractérisé en ce que le rapport atomique Mg/(Mg + Ca) est compris entre 0,1% et 70%, de préférence entre 43% et 53%.

8. Produit selon l'une quelconque des revendications 3 à 7 caractérisé en ce que le rapport atomique Ca/(Ca + Mg) est compris entre 0,1% et 3%.

9. Produit selon l'une quelconque des revendications 3 à 8 caractérisé en ce que le rapport atomique Al/(Al + Mg) est compris entre 0,1% et 7%.

10. Produit selon l'une quelconque des revendications 3 à 8 caractérisé en ce que le rapport atomique Al/(Al + Mg) est compris entre 15% et 25%.

11. Procédé d'obtention d'oxynitrure mixte d'aluminium et d'un ou plusieurs métaux alcalino-terreux, y compris le magnésium, dans lequel le composé AlN n'existe pas en tant que phase individuelle caractérisé en ce qu'on opère une nitruration directe d'un mélange de particules métalliques et de particules d'oxydes, infusibles dans les conditions de la nitruration, à une température supérieure à la température de fusion desdites particules métalliques sans fusion apparente du mélange en présence d'un gaz azoté pour obtenir un oxynitrure mixte partiellement ou totalement fritté.

12. Procédé selon la revendication 11 caractérisé en ce que les particules métalliques sont choisies parmi l'aluminium, les métaux alcalino-terreux, y compris le magnésium, leurs mélanges ou leurs alliages.

13. Procédé selon la revendication 11 caractérisé en ce que les particules d'oxydes infusibles sont choisies parmi MgO, $Al_2O_3$, CaO, SrO, la dolomie, les aluminates ou leurs mélanges.

14. Procédé selon l'une quelconque des revendications 11 à 13 caractérisé en ce que les particules sont une poudre de magnésium de dimension inférieure à 800 $\mu$m et une poudre d'alumine et qu'on chauffe le mélange vers 600-650°C sous atmosphère d'azote pour démarrer la réaction de nitruration.

15. Procédé d'obtention selon l'une quelconque des revendications 11 à 13 caractérisé en ce que les particules métalliques sont de l'aluminium de dimension inférieure à 1,5 mm et qu'on chauffe le mélange sous atmosphère d'azote vers 950-1050°C pour démarrer la réaction de nitruration.

16. Procédé selon l'une quelconque des revendications 11 à 15 caractérisé en ce que l'oxynitrure mixte obtenu est fondu ultérieurement, coulé, solidifié et éventuellement broyé.

17. Procédé selon l'une quelconque des revendications 11 à 15 caractérisé en ce que l'oxynitrure mixte obtenu est introduit dans un bain d'oxydes fondus, on coule, on solidifie et broye éventuellement.

18. Procédé selon l'une quelconque des revendications 11 à 17 caractérisé en ce que le mélange de départ est aggloméré ou pastillé.

19. Utilisation d'un produit obtenu selon l'une des revendications 11 à 18 comme réfractaire.

## Patentansprüche

1. Werkstoff zur Verkleidung eines abgeschirmten elektrischen Widerstandes,
dadurch **gekennzeichnet**, daß
er ein Pulver von Mischoxynitrid von Aluminium und einem oder mehreren Erdalkalimetallen einschließlich des Magnesiums aufweist, in dem die Verbindung AIN nur als gesonderte Phase vorliegt.

2. Werkstoff nach dem Anspruch 1,
dadurch gekennzeichnet, daß
das Metall das Magnesium ist.

3. Werkstoff nach dem Anspruch 1,
dadurch gekennzeichnet, daß
die Metalle das Magnesium und das Calcium sind.

4. Werkstoff nach dem Anspruch 3,
dadurch gekennzeichnet, daß
das Calcium wenigstens teilweise durch das Strontium ersetzt ist.

5. Werkstoff nach irgendeinem der Ansprüche 1 bis 4,
dadurch gekennzeichnet, daß
das Oxynitrid wenigstens teilweise eine Spinellstruktur von Magnesium- und Aluminiumoxiden hat, worin der Sauerstoff wenigstens teilweise durch Stickstoff ersetzt ist.

6. Werkstoff nach irgendeinem der Ansprüche 3 bis 5,
dadurch gekennzeichnet, daß
das Atomverhältnis Al/(Al + Mg + Ca) im Bereich von 0,1 % bis 40 % und vorzugsweise von 15 % bis 25 % liegt.

7. Werkstoff nach irgendeinem der Ansprüche 3 bis 6,
dadurch gekennzeichnet, daß
das Atomverhältnis Mg/(Mg + Ca) im Bereich von 0,1 % bis 70 %, vorzugsweise von 43 % bis 53 % liegt.

8. Werkstoff nach irgendeinem der Ansprüche 3 bis 7,
dadurch gekennzeichnet, daß
das Atomverhältnis Ca/(Ca + Mg) im Bereich von 0,1 % bis 3 % liegt.

9. Werkstoff nach irgendeinem der Ansprüche 3 bis 8,
dadurch gekennzeichnet, daß
das Atomverhältnis Al/(Al + Mg) im Bereich von 0,1 % bis 7 % liegt.

10. Werkstoff nach irgendeinem der Ansprüche 3 bis 8,
dadurch gekennzeichnet, daß
das Atomverhältnis Al/(Al + Mg) im Bereich von 15 % bis 25 % liegt.

11. Verfahren zur Herstellung von Mischoxynitrid von Aluminium und einem oder mehreren Erdalkalimetallen einschließlich des Magnesiums, in dem die Verbindung AIN nur als gesonderte Phase vorliegt,
dadurch gekennzeichnet, daß
man eine direkte Nitrierung eines Gemisches von metallischen Teilchen und Oxidteilchen, die unter den Bedingungen der Nitrierung unschmelzbar sind, bei einer Temperatur über der Schmelztemperatur der metallischen Teilchen ohne anscheinendes Schmelzen des Gemisches in Gegenwart eines stickstoffhaltigen Gases durchführt, um ein teilweise oder völlig gesintertes Mischoxynitrid zu erhalten.

12. Verfahren nach dem Anspruch 11,
dadurch gekennzeichnet, daß
die metallischen Teilchen unter dem Aluminium, den Erdalkalimetallen einschließlich des Magnesiums, ihren Mischungen oder ihren Legierungen gewählt werden.

13. Verfahren nach dem Anspruch 11,
dadurch gekennzeichnet, daß
die Teilchen unschmelzbarer Oxide unter MgO, Al$_2$O$_3$, CaO, SrO, dem Dolomit, den Aluminaten oder ihren Mischungen gewählt werden.

14. Verfahren nach irgendeinen der Ansprüche 11 bis 13,
dadurch gekennzeichnet, daß
die Teilchen ein Magnesiumpulver einer Abmessung unter 800 μm und ein Aluminiumoxidpulver sind und daß man die Mischung auf 600-650°C in Stickstoffatmosphäre erhitzt, um die Nitrierungsreaktion auszulösen.

15. Verfahren nach irgendeinem der Ansprüche 11 bis 13,
dadurch gekennzeichnet, daß
die metallischen Teilchen aus Aluminium einer Abmessung unter 1,5 mm sind und daß man die Mischung in Stickstoffatmosphäre auf 950-1050°C erhitzt, um die Nitrierungsreaktion auszulösen.

16. Verfahren nach irgendeinem der Ansprüche 11 bis 15,
dadurch gekennzeichnet, daß
das erhaltene Mischoxynitrid später geschmolzen, gegossen, erstarrt und eventuell zerkleinert wird.

17. Verfahren nach irgendeinem der Ansprüche 11 bis 15,
dadurch gekennzeichnet, daß
das erhaltene Mischoxynitrid in ein Bad geschmolzener Oxide eingeführt wird, man gießt, man erstarrt und eventuell zerkleinert.

18. Verfahren nach irgendeinem der Ansprüche 11 bis 17,
dadurch gekennzeichnet, daß
die Ausgangsmischung agglomeriert oder tablettiert wird.

19. Verwendung eines nach einem der Ansprüche 11 bis 18 erhaltenen Werkstoffs als feuerfeste Verkleidung.

## Claims

1. Shielded electrical resistor lining product, characterized in that it comprises a mixed oxynitride powder of aluminium and one or more alkaline earth metals, including magnesium, in which the AlN compound does not exist as an individual phase.

2. Product according to claim 1, characterized in that the metal is magnesium.

3. Product according to claim 1, characterized in that the metals are magnesium and calcium.

4. Product according to claim 3, characterized in that the calcium is at least partly replaced by strontium.

5. Product according to any one of the claims 1 to 4, characterized in that the oxynitride at least partly has a spinel structure of magnesium and aluminium oxides, in which the oxygen is at least partly replaced by nitrogen.

6. Product according to any one of the claims 3 to 5, characterized in that the Al/(Al+Mg+Ca) atomic ratio is between 0.1 and 40% and preferably between 15 and 25%.

7. Product according to any one of the claims 3 to 6, characterized in that the Mg/(Mg+Ca) atomic ratio is between 0.1 and 70%, preferably between 43 and 53%.

8. Product according to any one of the claims 3 to 7, characterized in that the Ca/(Ca+Mg) atomic ratio is between 0.1 and 3%.

9. Product according to any one of the claims 3 to 8, characterized in that the Al/(Al+Mg) atomic ratio is between 0.1 and 7%.

10. Product according to any one of the claims 3 to 8, characterized in that the Al/(Al+Mg) atomic ratio is between 15 and 25%.

11. Process for obtaining the mixed oxynitride of aluminium and one or more alkaline earth metals, including magnesium, in which the AlN compound does not exist as an individual phase, characterized in that direct nitriding takes place of a mixture of metallic particles and oxide particles, which are unmeltable under the conditions of the nitriding, at a temperature above the melting point of said metallic particles and without any apparent melting of the mixture, in the presence of a nitrogen-containing gas, in order to obtain a partly or totally sintered, mixed oxynitride.

12. Process according to claim 11, characterized in that the metallic particles are chosen from among aluminium, alkaline earth metals, including magnesium, their mixtures or their alloys.

13. Process according to claim 11, characterized in that the unmeltable oxide particles are chosen from among $MgO$, $Al_2O_3$, $CaO$, $SrO$, dolomite, aluminates or their mixtures.

14. Process according to any one of the claims 11 to 13, characterized in that the particles are a magnesium powder with a grain size smaller than 800 $\mu$m and an alumina powder and that the mixture is heated at about 600 to 650°C under a nitrogen atmosphere in order to start up the nitriding reaction.

15. Process according to any one of the claims 11 to 13, characterized in that the metallic particles are aluminium with a grain size below 1.5 mm and that the mixture is heated under a nitrogen atmosphere at about 950 to 1050°C in order to start up the nitriding reaction.

16. Process according to any one of the claims 11 to 15, characterized in that the mixed oxynitride obtained is subsequently melted, cast, solidified and optionally ground.

17. Process according to any one of the claims 11 to 15, character- ized in that the mixed oxynitride obtained is introduced into a bath of molten oxides, cast, solidified and optionally ground.

18. Process according to any one of the claims 11 to 17, characterized in that the starting mixture is agglomerated or pelletized.

19. Product obtained according to any one of the claims 11 to 18, characterized in that it is used as a refractory.